# EUROPÄISCHE PATENTANMELDUNG

(11) **EP 2 740 689 A1**
(43) Veröffentlichungstag der Anmeldung: **11.06.2014**
(21) Anmeldenummer: 13005658.3
(22) Anmeldetag: 05.12.2013
(51) Int. Cl.: B65D 83/08

(54) **Vorrichtung zur Aufbewahrung und/oder Entnahme von Feuchttüchern und Verfahren zur Herstellung einer Vorrichtung zur Aufbewahrung und/oder Entnahme von Feuchttüchern**

(30) Priorität: 05.12.2012 DE 102012023692
(71) Anmelder: Imeco Einwegprodukte GmbH & Co. KG, 63768 Hösbach (DE)
(72) Erfinder: Holtmann, Michael, 63768 Hösbach (DE)
(74) Vertreter: Thürer, Andreas

(57) **Zusammenfassung**

Vorrichtung (1) zur Aufbewahrung und/oder Entnahme von Tüchern (2), insbesondere Einmaltüchern, insbesondere Feuchttüchern, umfassend einen Vorratsbereich (3) mit einem zumindest teilweise umgebenden Verpackungsmittel (4), insbesondere ein Beutel (5) oder ein festwandiges Gefäß (6), und einen Entnahmebereich (7), der ein Entnahmemittel (8) aufweist, das in eine Entnahmeöffnung (9) eingesetzt ist, die in das Verpackungsmittel eingebracht ist, wobei das Entnahmemittel (8) eine mittels Einsatzwänden gebildete Öffnung (11) aufweist, durch die die Tücher (2) entnommen werden können.

## Beschreibung

Die vorliegende Erfindung betrifft eine Vorrichtung zur Aufbewahrung und/oder Entnahme von Feuchttüchern nach dem Oberbegriff von Anspruch 1 und ein Verfahren nach dem Oberbegriff von Anspruch 9.

Bekannt sind Verpackungen von Feuchttüchern in Schlauchbeuteln aus Kunststoff, die in der Folienverpackung oder auf einer Rolle aufgerollt zum Schutz gegen Austrocknen in eine verschließbare Dose eingelegt werden können, wobei die Dose einen einfachen Klappdeckel aufweist.

Der vorliegenden Erfindung liegt die Aufgabe zugrunde, eine Vorrichtung zur Aufbewahrung und/oder Entnahme von Tüchern bereitzustellen, die einfach aufgebaut ist und sicher zu bedienen ist.

Die Aufgabe wird gelöst durch eine Vorrichtung zur Aufbewahrung und/oder Entnahme von Tüchern, insbesondere Einmaltüchern, insbesondere Feuchttüchern, umfassend einen Vorratsbereich mit einem zumindest teilweise umgebenden Verpackungsmittel, insbesondere ein Beutel oder ein festwandiges Gefäß, und einen Entnahmebereich, der ein Entnahmemittel aufweist, das in eine Entnahmeöffnung eingesetzt ist, die in das Verpackungsmittel eingebracht ist, wobei das Entnahmemittel eine mittels Einsatzwänden gebildete Öffnung aufweist, durch die die Tücher entnommen werden können.

Ein zentraler Punkt der Erfindung ist ein Entnahmemittel, welches beispielhaft sowohl für Beutel als auch für Gefäße insbesondere Eimer eingesetzt werden kann. meöffnung in nahezu jeden handelsüblichen Deckel, mit anschließendem Einschrauben des Entnahmemittels in den Deckel ein komfortables Entnahmesystem für feuchte Tücher schnell und einfach hergestellt werden.

Dieses Entnahmemittel kann bei einem Defekt zum Beispiel an der Befestigungsmittel, insbesondere in Form eines Filmscharniers zwischen einem Durchführungsbereich des Entnahmemittels und dem dazugehörigen Abdeckungsmittel, ohne dass der gesamte Vorratsbereich ersetzt werden muss, auch vom Anwender einfach ausgeschraubt und durch ein neues Entnahmemittel ersetzt werden. Dieses führt zur Vermeidung von unnötigem Abfall.

Nach dem Befüllen eines Tuchvorrats im Vorratsbereich der Vorrichtung, insbesondere eines Beutels - sei es mit trockenen Tuchröllchen oder zusätzlich zur Tuchrolle mit Flüssigkeit und dem anschließendem Verschweißen - lässt sich durch die vorliegende Erfindung ein dichtes Gebinde erzeugen, welches die Tücher optimal gegen Austrocknen schützt.

Zur Abfallvermeidung kann ein Entnahmemittel für mehrere Beutel verwendet werden. Über eine Farbcodierung der Entnahmemittel kann das Entnahmemittel einem bestimmten Anwendungsbereich zugeordnet werden.

Vorteilhaft ist es, wenn das Entnahmemittel ein an die Einsatzwände angepasst ausgebildetes Abdeckungsmittel aufweist, da hierdurch ein sicherer Feuchtigkeitserhalt und Hygiene gewährleistet ist.

Vorteilhaft ist es, wenn das Entnahmemittel im Wesentlichen rund ausgebildet ist, da auf diese Weise beispielsweise ein einfaches Ausarbeiten einer Entnahmeöffnung möglich ist.

Vorteilhaft ist es, wenn die Öffnung im Entnahmemittel in einem Durchführungsbereich auf eine minimale Größe begrenzt ist, wobei er insbesondere eine Querschnittsform mit beweglichen Flanken aufweist, insbesondere eine Kreuzform. Die Kreuzform und die kleine Öffnung hält das hindurchgezogene Tuch fest bis zum nächsten Ausziehen.

Vorteilhaft ist es, wenn das Entnahmemittel in das Verpackungsmittel einklipsbar und/oder eindrehbar ausgebildet ist. Die Entnahmemittel sind somit wieder entfernbar und austauschbar.

Vorteilhaft ist es, wenn das Entnahmemittel in dem Verpackungsmittel, insbesondere in einer flexiblen Kunststofffolie, mit einem Dichtmittel, insbesondere in Form eines Rings, abgedichtet ist, insbesondere gegen Austritt von Feuchtigkeit der Tücher. Beispielsweise kann durch einfaches Einschweißen oder Einkleben eines Ringes im Inneren eines Beutels eine einfache wieder verwendbare Entnahmeöffnung geschaffen werden. Die Entnahmeöffnung kann somit einfach durch Hinzufügen eines Dichtringes flüssigkeitsdicht gestaltet werden. Wird das Gebinde angebrochen, kann durch einfaches Einschneiden des Verpackungsmittels im Inneren des Dichtringes und anschließendes Einschrauben des Entnahmemittels, ein sehr einfach ein komfortables Entnahmesystem für feuchte Tücher geschaffen werden.

Vorteilhaft ist es, wenn das Tuch einen Vliesstoff aufweist, der mit einer Flüssigkeit getränkt ist, wobei der Vliesstoff insbesondere ein thermisch Heißluft-verfestigter Vliesstoff ist, und/oder dass die Tücher mit einer Flüssigkeit zum Desinfizieren getränkt sind.

Vorteilhaft ist es, wenn das Entnahmemittel eine mittels Einsatzwänden gebildete Öffnung aufweist, durch die die Tücher entnommen werden können, wobei die Öffnung eine im wesentlichen geschlossene Öffnungsfläche mit einem zentralen, kreuzartigen Durchführungsbereich aufweist, die im Verhältnis zur Öffnungsfläche insbesondere weniger als etwa ein Viertel des Durchmessers der Öffnungsfläche umfasst, insbesondere weniger als ein Fünftel und wobei das Abdeckungsmittel an die Einsatzwände angepasst aufsetzbar ist und insbesondere mittels eines Befestigungsmittels an den Einsatzwänden befestigt ist. Das Loch in Verpackungsmittel ist groß genug, um den Anfang des Tuches in den Stern des Entnahmemittels einzuführen. Durch die Sternform mit den Flanken kann das Tuch sicher und gegen Feuchtigkeitsaustritt abgedichtet gehalten werden.

Die Aufgabe wird ebenfalls gelöst durch ein Verfahren zur Herstellung einer Vorrichtung zur Aufbewahrung und/oder Entnahme von Tüchern, insbesondere Einmaltüchern, insbesondere Feuchttüchern, insbesondere nach einem der Ansprüche 1 bis 9, wobei eine Entnahmeöffnung für ein Entnahmemittel in ein Verpackungsmittel eingebracht wird, insbesondere eingestanzt, insbesondere ein Dichtmittel in die Entnahmeöffnung eingebracht wird, Tücher in einen Vorratsbereich mit einem zumindest teilweise umgebenden Verpackungsmittel eingebracht werden und ein angepasst ausgebildetes Entnahmemittel mit einem Durchführungsbereich in die Entnahmeöffnung im Verpackungsmittel eingesetzt wird.

Weitere Merkmale und Vorteile der Erfindung ergeben sich aus den Ansprüchen und der nachstehenden Beschreibung, in ein Ausführungsbeispiel des Gegenstands der Erfindung in Verbindung mit der Zeichnung näher erläutert ist. Es zeigt:
- Fig. 1: eine Vorrichtung zur Aufbewahrung,
- Fig. 2: eine Vorrichtung zur Aufbewahrung,
- Fig. 3: eine Vorrichtung zur Aufbewahrung,
- Fig. 4: eine Vorratsbereich einer Vorrichtung zur Aufbewahrung,
- Fig. 5: eine Vorrichtung zur Aufbewahrung,
- Fig. 6: ein Entnahmemittel,
- Fig. 7: eine Vorrichtung zur Aufbewahrung mit Entnahmemittel und
- Fig. 8: eine Vorrichtung zur Aufbewahrung mit Entnahmemittel.

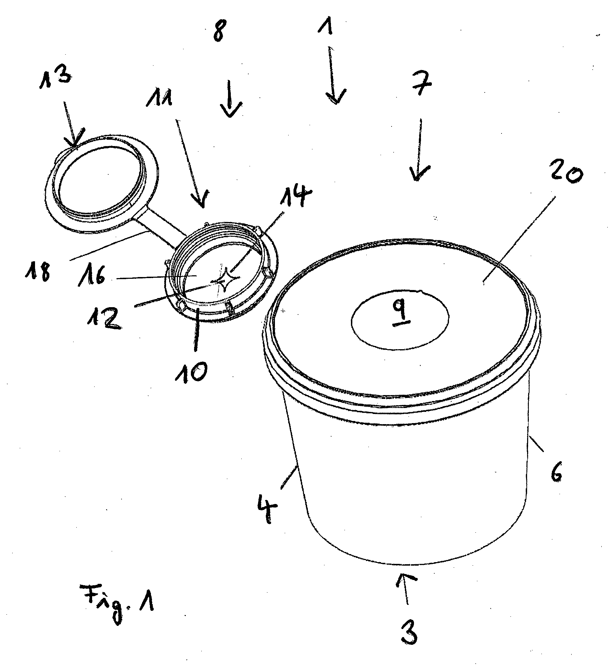

Fig. 1 zeigt eine Vorrichtung 1 zur Aufbewahrung mit einem Vorratsbereich 3, der hier mit einem Verpackungsmittel 4 in Form eines Gefäßes 6 ausgebildet ist. In einem Gefäßdeckel 20 ist beispielhaft in einem Entnahmebereich 7 eine Entnahmeöffnung 9 eingebracht, in die ein Entnahmemittel 8 eingebracht wird, insbesondere beispielhaft eingeschraubt mittels eines unterseitig angebrachten, nicht dargestellten Gewindes im Wesentlichen in Verlängerung einer Einsatzwand 10, eine Öffnung 11 umgibt. Die Öffnung 11 weist eine abgedeckte Öffnungsfläche 16 auf, in deren Mitte sich bespielhaft ein Durchführungsbereich 12 befindet, durch den Tücher, die im Gefäß 6 gelagert sind, entnommen und/oder gehalten werden können.

Der Durchführungsbereich 12 weist beispielhaft eine Kreuzform auf, wobei an den Seiten beispielhaft bewegliche Flanken 14 ein Einklemmen der durchgezogenen Tücher bewirken. Zum Verschließen des Entnahmebereichs 7 ist ein Abdeckungsmittel 13 vorgesehen, das beispielhaft im Bereich der Einsatzwand 10 über eine Befestigungsmittel 18 befestigt ist. Das Entnahmemittel 8 kann auf einfache Weise vor oder nach dem Einfüllen der Tücher in das Verpackungsmittel 4 eingebracht werden, wodurch beispielsweise auch ein Austausch nach dem Einbringen möglich ist.

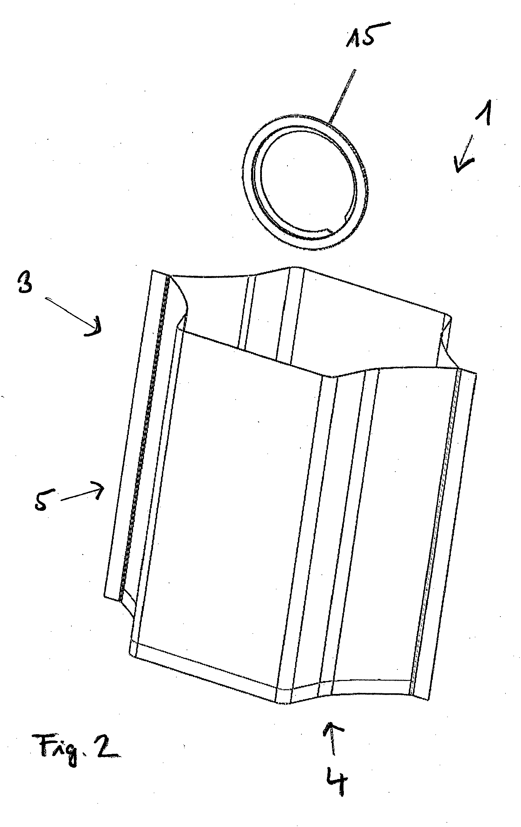

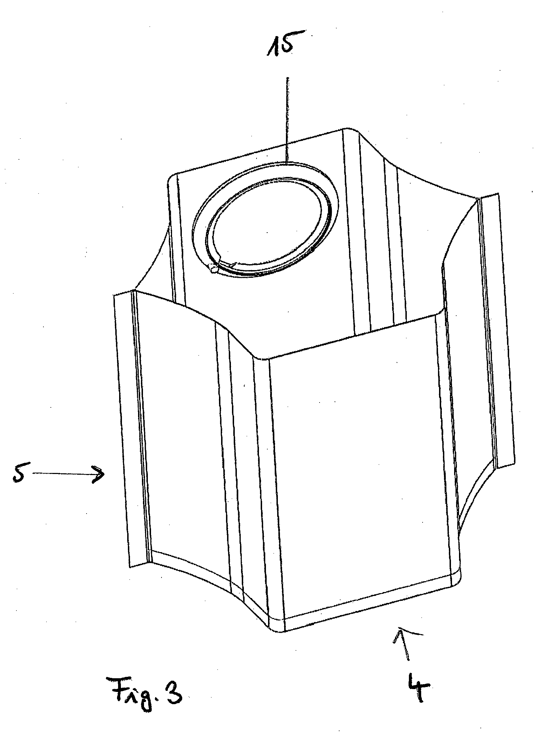

Fig. 2 zeigt eine Vorrichtung 1 zur Aufbewahrung wobei der Vorratsbereich 3 einen Beutel 5 aufweist. Ein Dichtmittel 15 wird an eine Seite des Verpackungsmittels 4 eingeschoben, wobei vor oder nachher eine Durchbrechung durch das Dichtmittel 15 in das Verpackungsmittel 4 eingebracht werden kann, zur Herstellung einer Entnahmeöffnung 9, wie in Fig. 3 dargestellt.

Fig. 3 zeigt eine Vorrichtung 1 zur Aufbewahrung in Form eines Beutels 5 als Verpackungsmittel 4 mit einem eingebrachten Dichtmittel 15.

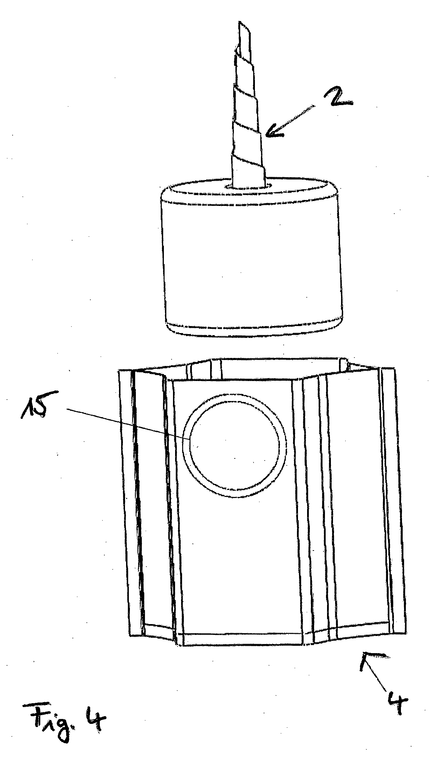

Fig. 4 zeigt einen Vorratsbereich 3 einer Vorrichtung 1 zur Aufbewahrung, wobei ein Tuchvorrat mit Tüchern 2 eingebracht wird.

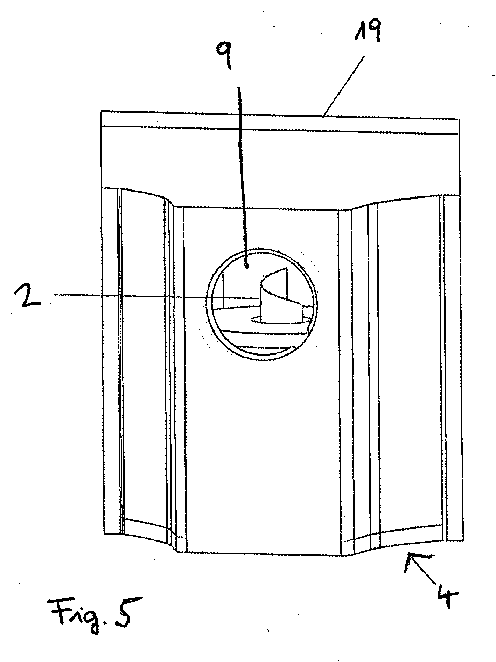

Fig. 5 zeigt eine Vorrichtung 1 zur Aufbewahrung mit Entnahmeöffnung 9 und einem eingebrachten Vorrat an Tüchern 2. Das Verpackungsmittel 4 ist allseitig geschlossen und in dem Bereich, in den die Tücher eingebracht wurden, weist es einen Verschlussbereich 19 auf, der insbesondere verschweißt ist.

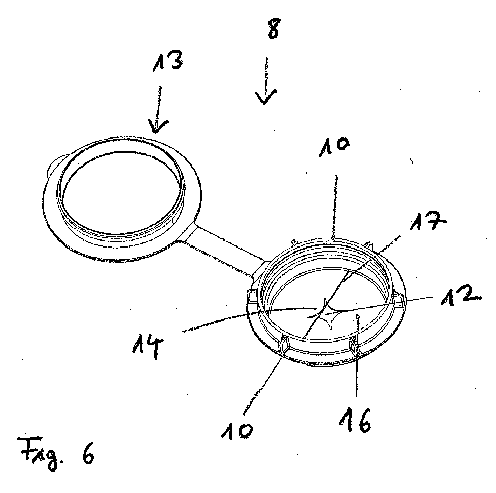

Fig. 6 zeigt ein Entnahmemittel 8 einer Vorrichtung zur Aufbewahrung. Das Entnahmemittel 8 weist einen Bereich mit einem Durchführungsbereich für Tücher auf und ein Abdeckmittel 13, das aufgesetzt werden kann, wodurch eine Feuchtigkeitsaustritt weitergehend verhindert wird. Der Durchführungsbereich 12 weist beispielhaft eine Kreuzform auf, wobei an den Seiten beispielhaft bewegliche Flanken 14 ein Einklemmen der durchgezogenen Tücher bewirken. Die Öffnungsfläche 16 weist einen Durchmesser 17 auf, wobei der Durchführungsbereich 12 nur einen Teil des Durchmessers 17 einnimmt.

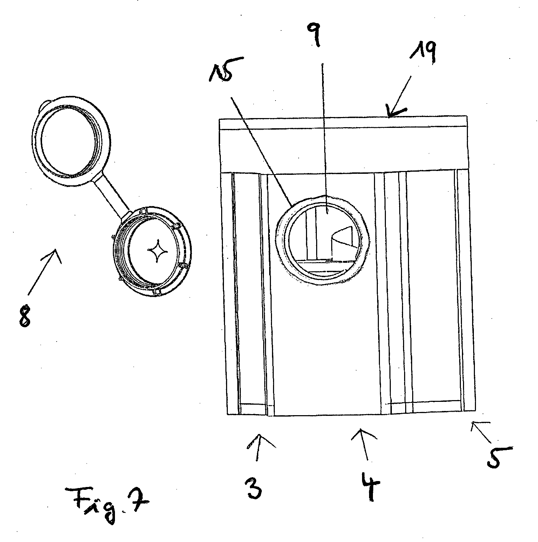

Fig. 7 zeigt ein Verpackungsmittel 4 in Form eines Beutels 5, wobei eine Entnahmeöffnung 9 mit einem Dichtring 15 eingebracht ist, in den das Entnahmemittel 8 eingesetzt wird, insbesondere eingeschraubt mit einem nicht dargestellten, unterseitigen Gewinde.

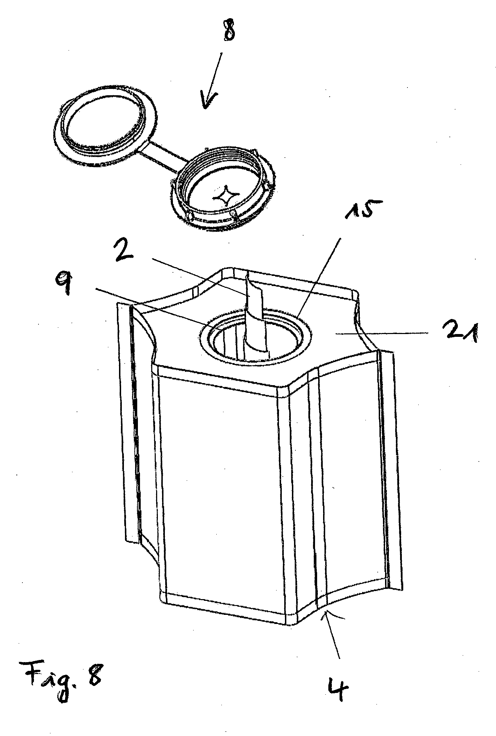

Fig. 8 zeigt ein Verpackungsmittel 4 in Form eines Beutels 5 mit eingebrachtem Tuchvorrat, wobei ein einer Oberseite 21 eine Entnahmeöffnung 9 eingebracht ist, in die das Entnahmemittel 8 einzusetzen ist.

### BEZUGSZEICHENLISTE

- 1: Vorrichtung zur Aufbewahrung und/oder Darreichung
- 2: Tuch
- 3: Vorratsbereich
- 4: Verpackungsmittel
- 5: Beutel
- 6: Gefäß
- 7: Entnahmebereich
- 8: Entnahmemittel
- 9: Entnahmeöffnung
- 10: Einsatzwand
- 11: Öffnung
- 12: Durchführungsbereich
- 13: Abdeckungsmittel
- 14: Flanken
- 15: Dichtmittel
- 16: Öffnungsfläche
- 17: Durchmesser
- 18: Befestigungsmittel
- 19: Verschlussbereich
- 20: Gefäßdeckel
- 21: Oberseite

## Patentansprüche

1. Vorrichtung (1) zur Aufbewahrung und/oder Entnahme von Tüchern (2), insbesondere Einmaltüchern, insbesondere Feuchttüchern, umfassend einen Vorratsbereich (3) mit einem zumindest teilweise umgebenden Verpackungsmittel (4), insbesondere ein Beutel (5) oder ein festwandiges Gefäß (6), und einen Entnahmebereich (7), der ein Entnahmemittel (8) aufweist, das in eine Entnahmeöffnung (9) eingesetzt ist, die in das Verpackungsmittel (4) eingebracht ist, wobei das Entnahmemittel (8) eine mittels Einsatzwänden (10) gebildete Öffnung (11) aufweist, durch die die Tücher (2) entnommen werden können

2. Vorrichtung nach Anspruch 1, **dadurch gekennzeichnet, dass** das Entnahmemittel (8) ein an die Einsatzwände (10) angepasst ausgebildetes Abdeckungsmittel (13) aufweist.

3. Vorrichtung nach Anspruch 1 oder 2, **dadurch gekennzeichnet, dass** das Entnahmemittel (8) im Wesentlichen rund ausgebildet ist.

4. Vorrichtung nach einem der Ansprüche 1 bis 3, **dadurch gekennzeichnet, dass** die Öffnung (11) im Entnahmemittel (8) in einem Durchführungsbereich (12) auf eine minimale Größe begrenzt ist, wobei er insbesondere eine Querschnittsform mit beweglichen Flanken (14) aufweist, insbesondere eine Kreuzform.

5. Vorrichtung nach einem der Ansprüche 1 bis 4, **dadurch gekennzeichnet, dass** das Entnahmemittel (8) in das Verpackungsmittel (4) einklipsbar und/oder eindrehbar ausgebildet ist.

6. Vorrichtung nach einem der Ansprüche 1 bis 5, **dadurch gekennzeichnet, dass** das Entnahmemittel (8) in dem Verpackungsmittel (4), insbesondere in einer flexiblen Kunststofffolie, mit einem Dichtmittel (15), insbesondere in Form eines Rings, abgedichtet ist, insbesondere gegen Austritt von Feuchtigkeit der Tücher.

7. Vorrichtung nach einem der Ansprüche 1 bis 6, **dadurch gekennzeichnet, dass** das Tuch (2) einen Vliesstoff aufweist, der mit einer Flüssigkeit getränkt ist, wobei der Vliesstoff insbesondere ein thermisch Heißluft-verfestigter Vliesstoff ist, und/oder dass die Tücher (2) mit einer Flüssigkeit zum Desinfizieren getränkt sind.

8. Vorrichtung nach einem der Ansprüche 1 bis 7, **dadurch gekennzeichnet, dass** das Entnahmemittel (8) eine mittels Einsatzwänden (10) gebildete Öffnung (11) aufweist, durch die die Tücher (2) entnommen werden können, wobei die Öffnung (11) eine im wesentlichen geschlossene Öffnungsfläche (16) mit einem zentralen, kreuzartigen Durchführungsbereich (12) aufweist, die im Verhältnis zur Öffnungsfläche (16) insbesondere weniger als etwa ein Viertel des Durchmessers (17) der Öffnungsfläche (16) umfasst, insbesondere weniger als ein Fünftel und wobei das Abdeckungsmittel (13) an die Einsatzwände (10) angepasst aufsetzbar ist und insbesondere mittels eines Befestigungsmittels (18) an den Einsatzwänden (10) befestigt ist.

9. Verfahren zur Herstellung einer Vorrichtung zur Aufbewahrung und/oder Entnahme von Tüchern, insbesondere Einmaltüchern, insbesondere Feuchttüchern, insbesondere nach einem der Ansprüche 1 bis 8, wobei eine Entnahmeöffnung (9) für ein Entnahmemittel (8) in ein Verpackungsmittel (4) eingebracht wird, insbesondere eingestanzt, insbesondere ein Dichtmittel (15) in die Entnahmeöffnung (9) eingebracht wird, Tücher (2) in einen Vorratsbereich (3) mit einem zumindest teilweise umgebenden Verpackungsmittel (4) eingebracht werden und ein angepasst ausgebildetes Entnahmemittel (8) mit einem Durchführungsbereich (12) in die Entnahmeöffnung (9) im Verpackungsmittel (4) eingesetzt wird.
